# EUROPÄISCHE PATENTANMELDUNG

(11) **EP 3 789 983 A1**
(43) Veröffentlichungstag der Anmeldung: **10.03.2021**
(21) Anmeldenummer: 19195976.6
(22) Anmeldetag: 06.09.2019
(51) Int. Cl.: G08G 1/01, G08G 1/08, G08G 1/0968, G08G 1/015, G01C 21/34

(54) **ZENTRALISIERTE REGULIERUNG EINES VERKEHRSFLUSSES**

(71) Anmelder: Siemens Aktiengesellschaft, 80333 München (DE)
(72) Erfinder: Botero Halblaub, Andrés, 85614 Kirchseeon (DE); Fischer, Jan, 81541 München (DE); Klein, Wolfram, 85579 Neubiberg (DE)

(57) **Zusammenfassung**

Die Erfindung betrifft ein Verfahren und eine zentrales Navigationssystem zur zentralisierten Regulierung eines Verkehrsflusses eines vorgegebenen geographischen Gebiets durch ein zentrales Navigationssystem (ZN). Ausgehend von Verkehrsinformationsdaten (VID1, VID2, VID3, ...) verschiedener Verkehrsteilnehmer wird der Verkehrsfluss mittels eines computergestützten Simulationsmodells simuliert. Auf Basis der Simulation (SIM) wird der Verkehrsfluss gemäß einem vorgegebenen Optimierungskriterium und mittels eines computergestützten Optimierungsverfahrens (OPT) optimiert. Es wird eine Navigationsinformation (NAVI) vom optimierten Verkehrsfluss abgeleitet und durch das zentrale Navigationssystem zum Regulieren des Verkehrsflusses ausgegeben.

## Beschreibung

Die Erfindung betrifft ein Verfahren, ein zentrales Navigationssystem, eine Kommunikationseinheit eines Verkehrsteilnehmers und ein Computerprogrammprodukt zur zentralisierten Regulierung eines Verkehrsflusses eines vorgegebenen geographischen Gebiets.

Insbesondere in Städten und Ballungsräumen wird der Straßenverkehr zunehmend komplexer und damit anfälliger für Verkehrsstaus, Verkehrsbehinderungen und/oder Überlastung, insbesondere durch die Vielzahl und Vielfalt an Verkehrsteilnehmern, wie z.B. Individualverkehr, öffentlicher Personennahverkehr und/oder autonomer Verkehr. Verkehrstaus sind ineffizient, zeit-, ressourcen- und/oder kostenintensiv. Navigationshilfen und -empfehlungen können zwar alternative Routen bereitstellen, allerdings sind diese in der Regel lediglich Reaktionen auf bereits eingetretene Verkehrsstörungen und erlauben die Regulierung des lokalen Verkehrs in der Nähe der entsprechenden Verkehrsstörung.

Es ist daher die Aufgabe der Erfindung, einen Verkehrsfluss zu regulieren, um insbesondere Verkehrsstörungen zu vermeiden.

Die Aufgabe wird durch die in den unabhängigen Ansprüchen beschriebenen Maßnahmen gelöst. In den abhängigen Ansprüchen sind vorteilhafte Weiterbildungen der Erfindung dargestellt.

Gemäß einem ersten Aspekt betrifft die Erfindung ein Verfahren zur zentralisierten Regulierung eines Verkehrsflusses eines vorgegebenen geographischen Gebiets durch ein zentrales Navigationssystem, aufweisend die folgenden Verfahrensschritte:
- Empfangen von Verkehrsinformationsdaten durch das zentrale Navigationssystem zu einem vorgegebenen Zeitpunkt,
- Einlesen eines computergestützten Simulationsmodells des Verkehrsflusses des geographischen Gebiets,
- Simulieren des Verkehrsflusses ausgehend von den Verkehrsinformationsdaten mittels des computergestützten Simulationsmodells für eine vorgegebene Zeitspanne,
- Optimieren des Verkehrsflusses des geographischen Gebiets gemäß einem vorgegebenen Optimierungskriterium und mittels eines computergestützten Optimierungsverfahrens auf Basis der Simulation des Verkehrsflusses,
- Ableiten einer Navigationsinformation von dem optimierten Verkehrsfluss
   und
- Ausgeben der Navigationsinformation durch das zentrale Navigationssystem zum Regulieren des Verkehrsflusses.

Es ist ein Vorteil der vorliegenden Erfindung, dass mittels eines zentralen Navigationssystems der Verkehrsfluss zentralisiert geregelt werden kann, vorzugsweise bevor eine Verkehrsstörung eingetreten ist. Der Verkehrsfluss wird dazu gemäß einem Optimierungskriterium optimiert. Es wird auf Basis der computergestützten Simulation des Verkehrsflusses ein optimierter Verkehrsfluss für eine bestimmte Zeitspanne bestimmt. Der optimierte Verkehrsfluss kann mittels der Navigationsinformation realisiert werden. Es wird beispielsweise mindestens ein optimierter Verkehrsflussparameter bestimmt, von dem insbesondere die Navigationsinformation abgeleitet werden kann.

Das Verfahren ermöglicht vorzugsweise eine vorausschauende Regulierung des Verkehrs, insbesondere verschiedener Verkehrsteilnehmer, wie z.B. Individualverkehr, öffentlicher Personennahverkehr und/oder autonomer Verkehr. Ausgehend von einer Verkehrssituation zu einem vorgegebenen Zeitpunkt wird ein optimierter Verkehrsfluss für eine vorgegebene Zeitspanne ermittelt. Der Verkehrsfluss wird gemäß einem vorgegebenen Optimierungskriterium, z.B. hinsichtlich Energie oder Zeit, oder multikriteriell optimiert. Vorzugsweise wird dazu ein robustes Optimierungsverfahren genutzt.

Der Verkehrsfluss, insbesondere verschiedener Verkehrsteilnehmer, wird dazu mindestens einmal, vorzugsweise mehrmals, unter Berücksichtigung vorgegebener Simulationsparameterwerte computergestützt simuliert. Beispielsweise werden verschiedene Szenarien simuliert. Es wird der Verkehrsfluss eines vorgegebenen geographischen Gebiets, z.B. ein Stadtgebiet, berücksichtigt, wobei insbesondere auch der Verkehrsfluss über die Gebietsgrenzen hinweg berücksichtigt werden kann. Verkehrsinformationsdaten können beispielsweise Zeitinformation, Ortsinformation, Geschwindigkeitsinformation und/oder Zielinformation umfassen und werden von den jeweiligen Verkehrsteilnehmern bereitgestellt. Ausgehend von den Verkehrsinformationsdaten wird der Verkehrsfluss simuliert und optimiert.

In einer Ausführungsform des Verfahrens können die Verkehrsinformationsdaten mittels einer einem jeweiligen Verkehrsteilnehmer zugeordneten Kommunikationseinheit und/oder mittels eines Verkehrsüberwachungssystems erfasst werden.

Vorzugsweise werden die Verkehrsinformationsdaten dezentral erfasst, d.h. von einer Kommunikationseinheit eines jeweiligen Verkehrsteilnehmers, und an eine zentrale Stelle, z.B. das zentrale Navigationssystem, übermittelt. Die Verkehrsinformationsdaten können in einer Datenbank strukturiert zur Übermittlung an das zentrale Navigationssystem bereitgestellt werden. Beispielsweise kann dazu ein Wissensgraph (engl. Knowledge Graph) genutzt werden. Vorzugsweise werden die Verkehrsinformationsdaten in einem einheitlichen Datenformat oder in ein einheitliches Datenformat transformiert bereitgestellt.

In einer weiteren Ausführungsform des Verfahrens kann der jeweilige Verkehrsteilnehmer durch einen jeweiligen Verkehrsteilnehmertyp gekennzeichnet werden.

In einer weiteren Ausführungsform des Verfahrens können den Verkehrsinformationsdaten des Verkehrsteilnehmers der entsprechende Verkehrsteilnehmertyp zugeordnet werden.

Die Verkehrsteilnehmertypen können beispielsweise Individualverkehr, wie z.B. Fußgänger und/oder Radfahrer, autonomer Verkehr und/oder öffentlicher Personennahverkehr sein. Vorzugsweise sind empfangene Verkehrsinformationsdaten mit dem entsprechenden Verkehrsteilnehmertyp gekennzeichnet, so dass die jeweiligen Verkehrsinformationsdaten im Simulationsmodell abhängig vom Verkehrsteilnehmertyp modelliert werden können. Ein Verkehrsteilnehmertyp kann außerdem eine individualisierte Information des jeweiligen Verkehrsteilnehmers umfassen, wie z.B. Name, aktueller Aufenthaltsort oder Kennzeichen.

In einer weiteren Ausführungsform des Verfahrens kann die ausgegebene Navigationsinformation an die Kommunikationseinheit des Verkehrsteilnehmers übermittelt werden.

Beispielsweise kann somit eine Route eines Verkehrsteilnehmers mittels der ausgegebenen Navigationsinformation beeinflusst und/oder gesteuert werden.

In einer weiteren Ausführungsform des Verfahrens kann die ausgegebene Navigationsinformation teilnehmerspezifisch ausgegeben werden.

Für einen vorgegebenen Verkehrsteilnehmertyp, z.B. autonome Fahrzeuge, kann eine teilnehmerspezifische Navigationsinformation ausgegeben werden, die beispielsweise an die jeweiligen Verkehrsteilnehmer des jeweiligen Verkehrsteilnehmertyps übermittelt werden kann. So kann beispielsweise der Verkehrsfluss einer Flotte von Fahrzeugen oder einer Gruppe von Verkehrsteilnehmern reguliert werden. Außerdem kann die ausgegebene Navigationsinformation lediglich einem spezifischen Verkehrsteilnehmer übermittelt werden.

In einer vorteilhaften Ausführungsform des Verfahrens kann die Datenmenge der Verkehrsinformationsdaten reduziert werden und der Verkehrsfluss kann ausgehend von den reduzierten Verkehrsinformationsdaten simuliert werden.

Die Datenmenge kann vorzugsweise durch Datengruppierung und/oder Datenmittelung reduziert werden. So können beispielsweise lediglich makroskopische Verkehrsflüsse simuliert werden, um das System des Gesamtverkehrsflusses zu reduzieren. Außerdem können die Verkehrsinformationsdaten auf bestimmte Zeitintervalle reduziert und/oder ortsabhängig reduziert werden. Die Verkehrsinformationsdaten können insbesondere abhängig von einem Verkehrsteilnehmertyp reduziert werden. So kann beispielsweise für eine Gruppe von Verkehrsteilnehmern mit einem übereinstimmenden Verkehrsteilnehmertyp, die sich in einem vorgegebenen Teil des geographischen Gebiets befinden, die Verkehrsinformationsdaten gruppiert oder gemittelt und derart reduziert bereitgestellt werden. Beispielsweise können Verkehrsinformationsdaten einer Gruppe von Fußgängern nach Position und/oder Zeit gemittelt reduziert werden. Die Datenreduktion ermöglicht insbesondere eine schnelle, computergestützte Simulation des Verkehrsflusses, z.B. in Echtzeit, um zeitnah Navigationsinformation bereitstellen zu können.

In einer vorteilhaften Ausführungsform des Verfahrens kann das computergestützte Simulationsmodell des Verkehrsflusses jeweils mindestens eine typenspezifisches Simulationsmodellkomponente für einen jeweiligen Verkehrsteilnehmertyp umfassen.

Abhängig vom Verkehrsteilnehmertyp können verschiedene computergestützte Simulationsmodelle bzw. Simulationsmodellkomponenten genutzt werden, um die jeweilig unterschiedliche Dynamik und/oder Verhalten der jeweiligen Verkehrsteilnehmer abzubilden. Eine Simulationskomponente kann beispielsweise ein Zustandsautomat, ein Entscheidungsbaum, ein statistisches Modell bzw. Gleichung, oder ein physikalisches Modell sein.

In einer vorteilhaften Ausführungsform des Verfahrens kann das computergestützte Simulationsmodell und/oder eine jeweilige typenspezifische Simulationsmodellkomponente als diskrete Strömungssimulation ausgestaltet sein.

Insbesondere kann ein Gitter-Boltzmann-Verfahren (auch als Lattice-Boltzmann-Verfahren bezeichnet) genutzt werden, um die Berechnung der Simulation vorzugsweise einfach zu parallelisieren.

In einer weiteren Ausführungsform des Verfahrens kann ein Parameterraum des computergestützten Simulationsmodells und/oder einer jeweiligen typenspezifischen Simulationsmodellkomponente anhand von Verkehrsinformationsdaten eines vorgegebenen Verkehrsteilnehmers und/oder anhand von vorgegebenen Infrastrukturdaten beschränkt werden.

Es können beispielsweise Verkehrsinformationsdaten eines öffentlichen Verkehrsmittels, des Straßennetzes oder der Stra-βenverkehrsordnung als Nebenbedingungen für das computergestützte Simulationsmodell genutzt werden. Insbesondere können die Knoten und Kanten eines Wissensgraphen als Randbedingungen genutzt werden.

In einer weiteren Ausführungsform des Verfahrens kann das Optimieren des Verkehrsflusses anhand von Verkehrsinformationsdaten eines vorgegebenen Verkehrsteilnehmers und/oder von vorgegebenen Infrastrukturdaten beschränkt werden.

Dies ermöglicht beispielsweise, die jeweiligen Charakteristiken des Verkehrsflusses des geographischen Gebiets bei der Optimierung des Verkehrsflusses zu berücksichtigen.

In einer weiteren Ausführungsform des Verfahrens können als Folge eines den Verkehrsfluss betreffenden Ereignisses die Verkehrsinformationsdaten aktualisiert und der Verkehrsfluss erneut simuliert und/oder optimiert wird.

Beispielsweise können die Verkehrsinformationsdaten verschiedener Verkehrsteilnehmer in einer Notfallsituation, bei einer akuten Verkehrsstörung oder bei einem Verkehrsereignisses erneut abgerufen und anschließend der Verkehrsfluss unter Berücksichtigung des Ereignisses simuliert und/oder optimiert werden. Außerdem kann das den Verkehrsfluss betreffende Ereignis als Nebenbedingung für die Simulation und/oder die Optimierung berücksichtigt werden. Ein den Verkehrsfluss betreffendes Ereignis kann außerdem eine Randbedingung für die Simulation des Verkehrsflusses darstellen.

In einer weiteren Ausführungsform des Verfahrens kann der Verkehrsfluss für ein selektiertes Teilgebiet des geographischen Gebiets optimiert werden.

Dies ermöglicht vorzugsweise eine effiziente Optimierung des Verkehrsflusses für das selektierte Teilgebiet. Beispielsweise kann lediglich ein Teil des geographischen Gebiets ereignisbasiert, z.B. aufgrund von ungewöhnlich hohem Verkehrsaufkommen, selektiert werden, für welches die Simulation und/oder Optimierung durchgeführt wird.

In einer weiteren Ausführungsform des Verfahrens ist ein Verkehrsteilnehmer ein autonomes Fahrzeug und die ausgegebene Navigationsinformation kann an die Kommunikationseinheit des autonomen Fahrzeugs übermittelt und das autonome Fahrzeug mittels der Navigationsinformation gesteuert werden.

Demnach kann ein autonomes Fahrzeug beispielsweise unter Berücksichtigung der Verkehrslage des gesamten geographischen Gebiets gesteuert werden.

Ein weiterer Aspekt der Erfindung betrifft ein zentrales Navigationssystem zur zentralisierten Regulierung eines Verkehrsflusses eines vorgegebenen geographischen Gebiets, umfassend mindestens einen Prozessor, wobei das zentrale Navigationssystem derart eingerichtet ist:
- Verkehrsinformationsdaten zu einem vorgegebenen Zeitpunkt zu empfangen,
- ein computergestütztes Simulationsmodell des Verkehrsflusses des geographischen Gebiets einzulesen,
- den Verkehrsfluss ausgehend von den Verkehrsinformationsdaten mittels des computergestützten Simulationsmodells für eine vorgegebene Zeitspanne zu simulieren,
- den Verkehrsfluss des geographischen Gebiets gemäß einem vorgegebenen Optimierungskriterium und mittels eines computergestützten Optimierungsverfahrens auf Basis der Simulation des Verkehrsflusses zu optimieren,
- von dem optimierten Verkehrsfluss eine Navigationsinformation abzuleiten
   und
- die Navigationsinformation zum Regulieren des Verkehrsflusses auszugeben.

Das zentrale Navigationssystem kann beispielsweise Cloudbasiert realisiert werden. Die Regulierung kann dabei für das entsprechende geographische Gebiet und/oder für mehrere, beispielsweise angrenzende Gebiete, durchgeführt werden.

In einer vorteilhaften Ausführungsform kann das zentrale Navigationssystem mit einer Kommunikationseinheit eines Verkehrsteilnehmers gekoppelt sein, um Verkehrsinformationsdaten von der Kommunikationseinheit zu empfangen und/oder die Navigationsinformation an die Kommunikationseinheit des Verkehrsteilnehmers zu übermitteln.

Außerdem kann das zentrale Navigationssystem mit einem Verkehrsüberwachssystem gekoppelt sein, um weitere Verkehrsinformationsdaten, z.B. von Lichtschaltanlagen oder des öffentlichen Personennahverkehrs, zu empfangen.

Gemäß einem weiteren Aspekt betrifft die Erfindung eine Kommunikationseinheit eines Verkehrsteilnehmers, die derart eingerichtet ist,
- Verkehrsinformationsdaten des Verkehrsteilnehmers zu erfassen und an ein erfindungsgemäßes zentrales Navigationssystem zu übermitteln,
   und/oder
- eine durch das zentrale Navigationssystem ausgegebene Navigationsinformation zu empfangen.

Die Kommunikationseinheit kann insbesondere als Software, z.B. einer Anwendung auf einem mobilen Endgerät, und/oder als Hardware, z.B. ein integriertes Kommunikationsgerät eines Verkehrsmittels, realisiert sein. Die Kommunikationseinheit eines Verkehrsteilnehmers kann beispielsweise diesem zugeordnet sein, wie z.B. ein mobiles Kommunikationsgerät einem Fußgänger, oder mit dem Verkehrsteilnehmer gekoppelt sein, wie z.B. ein Steuerungsgerät eines autonomen Fahrzeugs. Die Kommunikationseinheit kann insbesondere eigerichtet sein, den Verkehrsteilnehmertyp des entsprechenden Verkehrsteilnehmers bereitzustellen.

Des Weiteren betrifft die Erfindung ein Computerprogrammprodukt, das derart auf einem Prozessor des erfindungsgemäßen zentralen Navigationssystems eingerichtet ist, umfassend Programmcodeteile, die bei der Ausführung des Programms durch einen Computer diesen veranlassen, das erfindungsgemäße Verfahren und/oder zumindest teilweise die Schritte eines erfindungsgemäßen Verfahrens auszuführen.

Ein Computerprogrammprodukt kann beispielsweise auf einem Speichermedium, wie z.B. Speicherkarte, USB-Stick, CD-ROM, DVD, ein nichtflüchtiger/dauerhaftes Speichermedium (engl. Non-transitory storage Medium) oder auch in Form einer herunterladbaren Datei von einem Server in einem Netzwerk bereitgestellt oder geliefert werden.

Ausführungsbeispiele des erfindungsgemäßen Verfahrens, zentralen Navigationssystem und Kommunikationseinheit sind in den Zeichnungen beispielhaft dargestellt und werden anhand der nachfolgenden Beschreibung näher erläutert. Es zeigen:
- Fig. 1:: ein erstes Ablaufdiagramm eines erfindungsgemäßen Verfahrens;
- Fig. 2:: eine schematische Darstellung eines erfindungsgemäßen Verfahrens;
- Fig. 3:: eine schematische Darstellung eines erfindungsgemäßen zentralen Navigationssystems; und
- Fig. 4:: schematische Darstellungen von erfindungsgemäßen Kommunikationseinheiten.

Einander entsprechende Teile sind in allen Figuren mit den gleichen Bezugszeichen versehen.

Insbesondere zeigen die nachfolgenden Ausführungsbeispiele lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

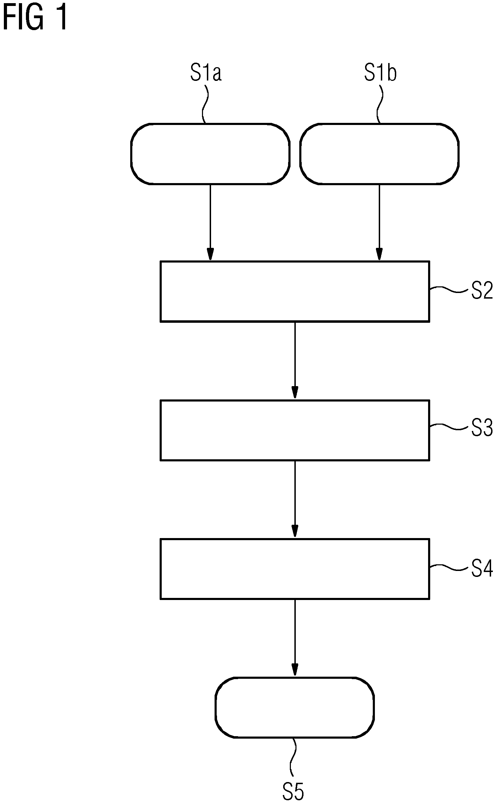

Figur 1 zeigt ein Ablaufdiagramm eines erfindungsgemäßen Verfahrens zur zentralisierten Regulierung eines Verkehrsflusses eines vorgegebenen geographischen Gebiets durch ein zentrales Navigationssystem. Beispielsweise kann damit für ein definiertes städtisches Gebiet ein optimierter Verkehrsfluss ermittelt und derart mindestens eine Navigationsinformation für mindestens einen Verkehrsteilnehmer ausgegeben werden, so dass der Verkehrsfluss für dieses städtische Gebiet optimiert reguliert werden kann.

Im ersten Schritt S1a des Verfahrens werden Verkehrsinformationsdaten von mindestens einem Verkehrsteilnehmer empfangen. Die Verkehrsinformationsdaten können beispielsweise Zeitinformation, Ortsinformation und/oder Zielinformation über das angestrebte Ziel des jeweiligen Verkehrsteilnehmers umfassen.

Außerdem können die Verkehrsinformationsdaten jeweils eine Information über den jeweiligen Verkehrsteilnehmertyp umfassen, wie z.B. "Fußgänger" oder "autonomes Fahrzeug".

Die Verkehrsinformationsdaten können beispielsweise mittels eines Sensors erfasst und von einer Kommunikationseinheit des jeweiligen Verkehrsteilnehmers dem zentralen Navigationssystems bereitgestellt werden. Alternativ können Verkehrsinformationsdaten von einem Verkehrsüberwachssystem, z.B. einer zentralen Leitstelle eines öffentlichen Nahverkehrssystems, bereitgestellt werden. Außerdem können Verkehrsinfrastrukturdaten, wie z.B. Schaltzeiten von Lichtsignalanlagen, bereitgestellt werden.

Des Weiteren wird ein computergestütztes Simulationsmodell des Verkehrsflusses des geographischen Gebiets eingelesen, Schritt S1b. Das computergestützte Simulationsmodell umfasst insbesondere eine Abbildung der Dynamik der jeweilig modellierten Verkehrsteilnehmer. Die Charakteristiken des geographischen Gebiets, wie z.B. Straßennetz oder Topologie, können beispielsweise als Nebenbedingungen im Simulationsmodell berücksichtigt werden.

Im nächsten Schritt S2 wird mittels des computergestützten Simulationsmodells und ausgehend von den Verkehrsflussdaten und/oder der Infrastrukturdaten eine computergestützte Simulation des Verkehrsflusses für eine definierte Zeitspanne durchgeführt. Dazu werden Werte der Simulationsparameter des computergestützten Simulationsmodells derart gewählt, dass der Verkehrsfluss für die jeweiligen Verkehrsteilnehmer prognostiziert werden kann. Die Simulation ermöglicht insbesondere eine Prognose der Verkehrssituation für einen bestimmten Zeitraum.

Für einen jeweiligen Verkehrsteilnehmertyp kann das computergestützte Simulationsmodell eine typenspezifische Simulationsmodellkomponente umfassen. Somit können beispielsweise unterschiedliche Verkehrsteilnehmertypen mittels jeweils geeigneten Simulationsmodellkomponenten modelliert werden. In anderen Worten, das jeweilige typenspezifische Verhalten eines Verkehrsteilnehmers kann somit mittels einer geeigneten Simulationsmodellkomponente abgebildet und simuliert werden.

Im nächsten Schritt S3 wird der Verkehrsfluss auf Basis der computergestützten Simulation des Verkehrsflusses und gemäß einem vorgegebenen Optimierungskriteriums mittels eines computergestützten Optimierungsverfahrens optimiert. Beispielsweise wird dabei mindestens ein Simulationsparameter des Simulationsmodells derart verändert bzw. angepasst, dass gemäß dem Optimierungskriterium der Verkehrsfluss optimiert wird. Das Optimierungskriterium kann beispielsweise Zeit oder Energie sein. Das Optimierungskriterium kann auch als gewichtetes Optimierungsziel ausgestaltet sein, das sich aus mehr als einem Kriterium zusammensetzt. In anderen Worten, es wird eine Zielfunktion des Verkehrsflusses bestimmt, diese optimiert und ein Zielfunktionswert als Optimierungsergebnis ausgegeben.

Beispielsweise werden Schaltzeiten einer Lichtsignalanlage im computergestützten Simulationsmodell des Verkehrsflusses modifiziert, so dass die Simulation des Verkehrsflusses für eine vorgegebene Zeitspanne einen effizienteren Durchfluss des Verkehrs an der entsprechenden Verkehrskreuzung der Lichtsignalanlage liefert. Außerdem kann beispielsweise eine Geschwindigkeit und/oder ein Routenplan eines Verkehrsteilnehmers oder einer definierten Gruppe von Verkehrsteilnehmern angepasst werden, so dass der Verkehrsfluss optimiert wird. Bei der computergestützten Simulation werden vorzugsweise alle vorhandenen bzw. erfassten Verkehrsteilnehmer berücksichtigt, wobei insbesondere das Simulationsmodell teilnehmerspezifische Simulationsmodellkomponenten umfassen kann. Vorzugsweise wird ein robustes Optimierungsverfahren genutzt.

Im nächsten Schritt S4 wird auf Basis des optimierten Verkehrsflusses mindestens eine Navigationsinformation für mindestens einen Verkehrsteilnehmer abgeleitet. Die Navigationsinformation kann beispielsweise auch für alle Verkehrsteilnehmer oder für alle Verkehrsteilnehmer eines bestimmten Verkehrsteilnehmertyps gelten. Eine Navigationsinformation umfasst beispielsweise ein Befehl oder eine Empfehlung zur Schaltzeitenregulierung einer Lichtsignalanlage, zur Routenänderung, zur Geschwindigkeitsanpassung und/oder zur Zieländerung. Die Navigationsinformation ist dabei derart eingerichtet, dass bei einer Umsetzung der Navigationsinformation, der optimierte Verkehrsfluss erzielt werden kann.

Im nächsten Schritt S5 wird die Navigationsinformation vom zentralen Navigationssystem zum Regulieren des Verkehrsflusses ausgegeben. Vorzugsweise wird die mindestens eine Navigationsinformation an mindestens eine Kommunikationseinheit eines Verkehrsteilnehmers ausgegeben. Die Navigationsinformation kann beispielsweise zur Steuerung eines Verkehrsteilnehmers, insbesondere eines autonomen Fahrzeugs, genutzt werden. Alternativ kann die Navigationsinformation als Navigationsempfehlung ausgestaltet sein, d.h. beispielsweise einen alternativen Routenvorschlag umfassen.

Mittels der Navigationsempfehlung kann eine zentrale und gebietsübergreifende Regulierung des Verkehrsflusses erzielt werden. Durch die Berücksichtigung der unterschiedlichen Dynamik der verschiedenen Verkehrsteilnehmer durch teilnehmerspezifische Simulationsmodelle wird ein optimierter Verkehrsfluss ermittelt, der mittels der mindestens einen Navigationsinformation realisiert werden kann.

Die Verkehrsinformationsdaten können zu einem definierten Zeitpunkt im zentralen Navigationssystem aktualisiert werden, so dass zu vorgegebenen Zeitpunkten eine aktuelle Simulation und anschließende Optimierung des Verkehrsflusses für eine vorgegebene Zeitspanne durchgeführt werden können.

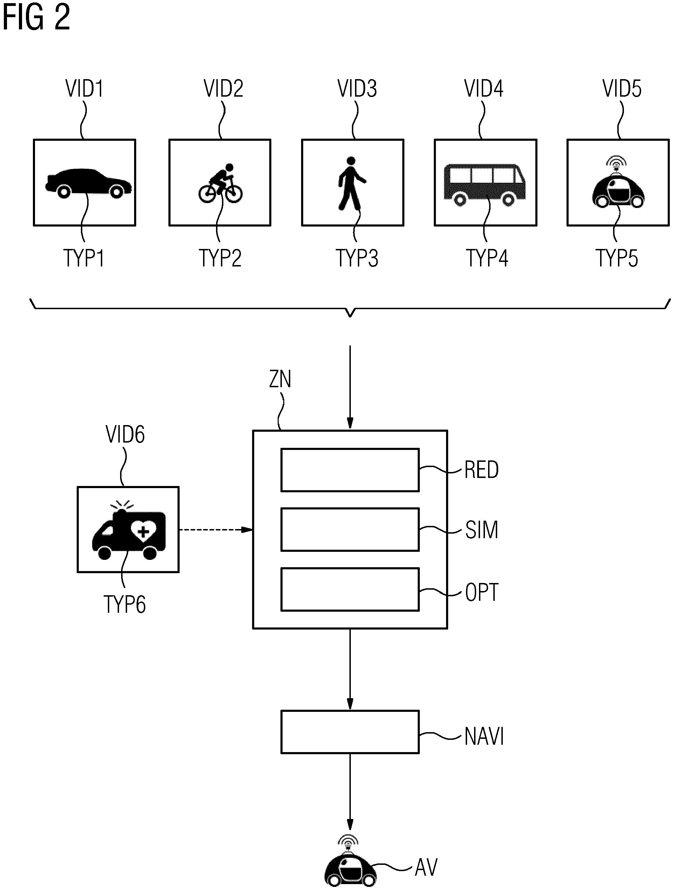

Figur 2 zeigt eine schematische Darstellung eines erfindungsgemäßen Verfahrens zur zentralisierten Regulierung eines Verkehrsflusses eines geographischen Gebiets.

Es wird angenommen, dass der Verkehr eines geographischen Gebiets verschiedene Verkehrsteilnehmer, die durch entsprechende Verkehrsteilnehmertypen TYP1, TYP2, ..., TYPS gekennzeichnet sind, umfasst. Der Verkehrsfluss soll für eine vorgegebene Zeitspanne erfindungsgemäß optimiert reguliert werden. Dazu werden zunächst zu einem vorgegebenen Zeitpunkt von den am Verkehr beteiligten Verkehrsteilnehmern Verkehrsinformationsdaten VID1, VID2, ..., VID5 empfangen. Die Verkehrsinformationsdaten VID1, VID2, ..., VID5 sind vorzugsweise teilnehmerspezifisch, d.h. den Verkehrsinformationsdaten VID1, VID2, ..., VID5 sind jeweils die jeweiligen Verkehrsteilnehmertypen TYP1, TYP2, ..., TYP5 zugeordnet. Die Verkehrsinformationsdaten VID1, VID2, ..., VID5 werden mittels Kommunikationseinheiten, die jeweils den Verkehrsteilnehmern zugeordnet sind, erfasst und an ein zentrales Navigationssystem ZN übermittelt. Beispielsweise erfolgt die Datenübertragung drahtlos. Die Verkehrsinformationsdaten VID1, VID2, ..., VID5 können außerdem ereignisbasiert oder in regelmäßigen Zeitintervallen von den Kommunikationseinheiten der Verkehrsteilnehmer durch das zentrale Navigationssystem ZN abgerufen werden.

Das zentrale Navigationssystem ZN ist derart eingerichtet, die Verkehrsinformationsdaten VID1, VID2, ..., VID5 und ein bereitgestelltes computergestütztes Simulationsmodell des Verkehrsflusses des geographischen Gebiets einzulesen. Um eine computergestützte Simulation SIM des Verkehrsflusses in Echtzeit oder in kurzer Zeit zu erstellen, wird die Datenmenge der Verkehrsinformationsdaten VID1, VID2, ..., VID5 zunächst reduziert. Die Reduktion RED der Verkehrsinformationsdaten VID1, VID2, ..., VID5 kann beispielsweise eine teilnehmerspezifische Datengruppierung und/oder Datenmittelung umfassen. Insbesondere für Verkehrsinformationsdaten von Fußgängern VID3 ist eine solche Datenreduktion vorteilhaft, um einen Fußgängerstrom effizient simulieren zu können.

Basierend auf den reduzierten Verkehrsinformationsdaten VID1, VID2, ..., VID5 wird die computergestützte Simulation SIM der Verkehrsfluss mittels des computergestützten Simulationsmodells durchgeführt. Die computergestützte Simulation SIM kann beispielsweise als diskrete Strömungssimulation oder als Materialflusssimulation realisiert werden. Die computergestützte Simulation SIM kann beispielsweise lediglich für ein Teilgebiet des geographischen Gebiets durchgeführt werden. Außerdem kann beispielsweise lediglich ein makroskopischer Fluss simuliert werden, um das System zu reduzieren. Die computergestützte Simulation SIM wird dabei für eine vorgegebene Zeitspanne ausgeführt.

Die Simulation SIM wird ausgehend von den Verkehrsinformationsdaten VID1, VID2, ..., VID5 ausgeführt. Des Weiteren können die Verkehrsinformationsdaten VID1, VID2, ..., VID5 den Parameterraum des computergestützten Simulationsmodells beschränken, wie z.B. vorgegebene Geschwindigkeiten oder Routenziele jeweiliger Verkehrsteilnehmer. Der Parameterraum des computergestützten Simulationsmodells kann außerdem auch mittels bereitgestellter Infrastrukturdaten beschränkt werden, d.h. die Infrastrukturdaten können als Randbedingungen berücksichtigt werden. Anschließend wird das Ergebnis der Simulation SIM ausgegeben.

Auf Basis der Simulation SIM des Verkehrsflusses wird eine Optimierung OPT des Verkehrsflusses mittels eines robusten Optimierungsverfahrens gemäß einem Optimierungskriterium oder einem Optimierungsziel, das mehrere Optimierungskriterien umfasst, durchgeführt. Beispielsweise werden dazu Simulationsparameter angepasst, erneut eine Simulation SIM mit den angepassten Simulationsparametern ausgeführt, so dass daraus ein optimierter Verkehrsfluss gemäß dem mindestens einen vorgegebenen Optimierungskriterium ermittelt werden kann. Die Optimierung OPT kann insbesondere anhand von Verkehrsinformationsdaten VID1, VID2, ..., VID5 mindestens eines Verkehrsteilnehmers und/oder von Infrastrukturdaten beschränkt werden. Außerdem können den Verkehrsfluss betreffende Ereignisse als Rand- bzw. Nebenbedingungen bei der Simulation SIM und/oder bei der Optimierung OPT berücksichtigt werden. So können beispielsweise aktuelle Verkehrsinformationsdaten eines sich im Einsatz befindlichen Rettungswagens VID6 zusätzlich dem zentralen Navigationssystem ZN übermittelt und beispielsweise bei der erfindungsgemäßen Bestimmung eines optimierten Verkehrsflusses berücksichtigt werden.

Weitere Kriterien, wie z.B. tägliche Verkehrsflussrichtungen, Wetterdaten oder Umweltdaten können zur Optimierung des Verkehrsflusses herangezogen werden.

In anderen Worten, mittels eines computergestützten robusten Optimierungsverfahrens OPT kann auf Basis der computergestützten Simulation SIM, unter Berücksichtigung der Verkehrsinformationsdaten VID1, VID2, ..., VID6 und/oder Infrastrukturdaten, mindestens ein optimierter Verkehrsflussparameter bestimmt werden. Abhängig von dem mindestens einen optimierten Verkehrsflussparameter wird mindestens eine Navigationsinformation NAVI abgeleitet.

Ein optimierter Verkehrsflussparameter wird somit anhand der Simulation SIM bestimmt. Es kann mittels des Optimierungsverfahrens OPT mindestens ein Simulationsparameter für den Verkehrsfluss derart bestimmt werden, dass ein optimierter Verkehrsfluss erzielt wird. So kann beispielsweise eine optimierte Geschwindigkeit für Verkehrsteilnehmer in einem definierten Teilgebiet des geographischen Gebiets ermittelt werden. Abhängig von diesem optimierten Verkehrsflussparameter kann eine Navigationsinformation NAVI abgeleitet werden, wie z.B. eine Geschwindigkeitsempfehlung für mindestens einen Verkehrsteilnehmer in dem entsprechenden Teilgebiet.

Die Navigationsinformation NAVI kann beispielsweise Navigationsempfehlungen oder Navigationsbefehle umfassen. Die Navigationsinformation NAVI kann insbesondere teilnehmerspezifisch ausgegeben werden, d.h. beispielsweise für einen bestimmten Verkehrsteilnehmer und/oder eine Gruppe von Verkehrsteilnehmern eine bestimmten Verkehrsteilnehmertyps TYP1, TYP2, ..., TYP6. Die Navigationsinformation NAVI kann insbesondere abhängig von der vorgegebenen Zeitspanne der Simulation SIM sein, d.h. beispielsweise lediglich für diese Zeitspanne gültig sein. Die Navigationsinformation NAVI kann beispielsweise zu einem definierten Zeitpunkt oder ereignisbasiert aktualisiert werden.

Die Navigationsinformation NAVI kann beispielsweise an eine Kommunikationseinheit eines autonomen Fahrzeugs AV übermittelt und dort an eine Steuereinheit des autonomen Fahrzeugs AV übergeben werden, so dass das autonome Fahrzeug gemäß der Navigationsinformation NAVI gesteuert wird. Derart kann zumindest ein Teil des Verkehrsflusses reguliert werden. Das zentrale Navigationssystem ZN ermittelt vorzugsweise Navigationsinformationen NAVI, die bei der Umsetzung durch die jeweiligen Verkehrsteilnehmer einen optimierten Verkehrsfluss erzielen.

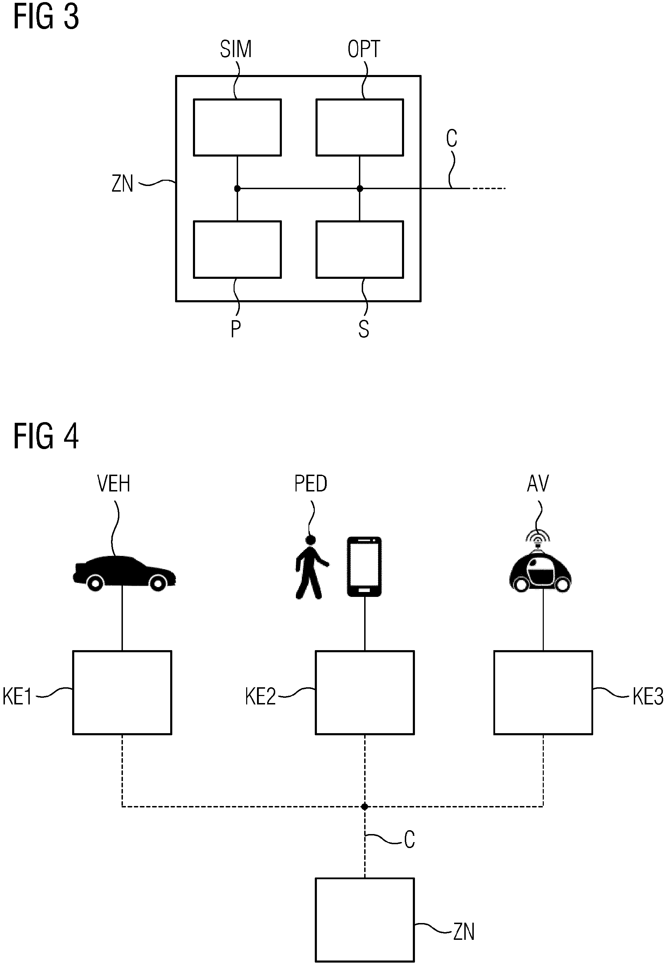

Figur 3 zeigt eine schematische Darstellung eines erfindungsgemäßen zentralen Navigationssystems ZN. Das zentrale Navigationssystem ZN umfasst mindestens einen Prozessor P und ist derart eingerichtet, die Schritte eines erfindungsgemäßen Verfahrens zur zentralisierten Regulierung eines Verkehrsflusses eines vorgegebenen geographischen Gebiets auszuführen. Des Weiteren kann das zentrale Navigationssystem eine Speichereinheit S, beispielsweise zur Speicherung von Verkehrsinformationsdaten, eine Simulationseinheit zur Ausführung der Simulation SIM und eine Einheit zur Ausführung der Optimierung OPT umfassen. Das zentrale Navigationssystem ZN weist außerdem mindestens eine Kommunikationsschnittstelle auf, die über eine drahtlose oder drahtgebundene Kommunikationsverbindung C mit mindestens einer Kommunikationseinheit eines Verkehrsteilnehmers und/oder einem Verkehrsüberwachungssystem verbunden werden kann.

Figur 4 zeigt verschiedene schematische Darstellungen von erfindungsgemäßen Kommunikationseinheiten KE1, KE2, KE3, die jeweils mit einem erfindungsgemäßen zentralen Navigationssystem ZN über drahtlose oder drahtgebundene Kommunikationsverbindungen C verbunden sind. Die Kommunikationseinheiten KE1, KE2, KE3 können Verkehrsinformationsdaten der jeweiligen Verkehrsteilnehmer an das zentrale Navigationssystem ZN übermitteln und/oder von diesem eine Navigationsinformation empfangen. Die Kommunikationseinheiten KE1, KE2, KE3 können beispielsweise als Hardware und/oder Software realisiert sein.

So kann beispielsweise eine Kommunikationseinheit KE1 eines Fahrzeugs ein Kommunikationsgerät sein, das im Fahrzeug VEH integriert oder mit diesem gekoppelt ist. Außerdem kann eine Kommunikationseinheit KE2 ein mobiles Kommunikationsgerät sein, das einem Fußgänger PED zugeordnet ist. Das mobile Kommunikationsgerät kann alternativ auch eine Kommunikationseinheit KE2 als Software implementiert umfassen. Ein autonomes Fahrzeug AV kann außerdem eine Kommunikationseinheit KE3 umfassen oder mit dieser gekoppelt sein, welche vorzugsweise derart mit einer Steuereinheit des autonomen Fahrzeugs gekoppelt ist, dass das autonome Fahrzeug AV auf Basis der empfangenen Navigationsinformation gesteuert werden kann.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zur zentralisierten Regulierung eines Verkehrsflusses eines vorgegebenen geographischen Gebiets durch ein zentrales Navigationssystem (ZN), aufweisend die folgenden Verfahrensschritte:
- Empfangen (S1a) von Verkehrsinformationsdaten (VID1, VID2, VID3, ...) durch das zentrale Navigationssystem (ZN) zu einem vorgegebenen Zeitpunkt,
- Einlesen (S1b) eines computergestützten Simulationsmodells des Verkehrsflusses des geographischen Gebiets,
- Simulieren (S2) des Verkehrsflusses ausgehend von den Verkehrsinformationsdaten (VID1, VID2, VID3, ...) mittels des computergestützten Simulationsmodells für eine vorgegebene Zeitspanne,
- Optimieren (S3) des Verkehrsflusses des geographischen Gebiets gemäß einem vorgegebenen Optimierungskriterium und mittels eines computergestützten Optimierungsverfahrens (OPT) auf Basis der Simulation (SIM) des Verkehrsflusses,
- Ableiten (S4) einer Navigationsinformation (NAVI) von dem optimierten Verkehrsfluss
und
- Ausgeben (S5) der Navigationsinformation (NAVI) durch das zentrale Navigationssystem (ZN) zum Regulieren des Verkehrsflusses.

2. Verfahren nach Anspruch 1, wobei die Verkehrsinformationsdaten (VID1, VID2, VID3, ...) mittels einer einem jeweiligen Verkehrsteilnehmer zugeordneten Kommunikationseinheit (KE1, KE2, KE3, ...) und/oder mittels eines Verkehrsüberwachungssystems erfasst werden.

3. Verfahren nach einem der vorhergehenden Ansprüche, wobei der jeweilige Verkehrsteilnehmer durch einen jeweiligen Verkehrsteilnehmertyp (TYP1, TYP2, TYP3, ...) gekennzeichnet wird.

4. Verfahren nach einem der vorhergehenden Ansprüche, wobei den Verkehrsinformationsdaten (VID1, VID2, VID3, ...) des Verkehrsteilnehmers der entsprechende Verkehrsteilnehmertyp (TYP1, TYP2, TYP3, ...) zugeordnet wird.

5. Verfahren nach einem der vorhergehenden Ansprüche, wobei die ausgegebene Navigationsinformation (NAVI) an die Kommunikationseinheit (KE1, KE2, KE3, ...) des Verkehrsteilnehmers übermittelt wird.

6. Verfahren nach einem der vorhergehenden Ansprüche, wobei die ausgegebene Navigationsinformation (NAVI) teilnehmerspezifisch ausgegeben wird.

7. Verfahren nach einem der vorhergehenden Ansprüche, wobei die Datenmenge der Verkehrsinformationsdaten (VID1, VID2, VID3, ...) reduziert wird und der Verkehrsfluss ausgehend von den reduzierten Verkehrsinformationsdaten simuliert wird.

8. Verfahren nach einem der vorhergehenden Ansprüche, wobei das computergestützte Simulationsmodell des Verkehrsflusses jeweils mindestens eine typenspezifische Simulationsmodellkomponente für einen jeweiligen Verkehrsteilnehmertyp umfasst.

9. Verfahren nach einem der vorhergehenden Ansprüche, wobei das computergestützte Simulationsmodell und/oder eine typenspezifische Simulationsmodellkomponente als diskrete Strömungssimulation ausgestaltet ist.

10. Verfahren nach einem der vorhergehenden Ansprüche, wobei ein Parameterraum des computergestützten Simulationsmodells und/oder einer jeweiligen typenspezifische Simulationsmodellkomponente anhand von Verkehrsinformationsdaten (VID1, VID2, VID3,...) eines vorgegebenen Verkehrsteilnehmers und/oder anhand von vorgegebenen Infrastrukturdaten beschränkt wird.

11. Verfahren nach einem der vorhergehenden Ansprüche, wobei das Optimieren des Verkehrsflusses anhand von Verkehrsinformationsdaten (VID1, VID2, VID3, ...) eines vorgegebenen Verkehrsteilnehmers und/oder von vorgegebenen Infrastrukturdaten beschränkt wird.

12. Verfahren nach einem der vorhergehenden Ansprüche, wobei als Folge eines den Verkehrsfluss betreffenden Ereignisses die Verkehrsinformationsdaten (VID1, VID2, VID3, ...) aktualisiert und der Verkehrsfluss erneut simuliert und/oder optimiert wird.

13. Verfahren nach einem der vorhergehenden Ansprüche, wobei der Verkehrsfluss für ein selektiertes Teilgebiet des geographischen Gebiets optimiert wird.

14. Verfahren nach einem der vorhergehenden Ansprüche, wobei ein Verkehrsteilnehmer ein autonomes Fahrzeug ist, die ausgegebene Navigationsinformation an die Kommunikationseinheit des autonomen Fahrzeugs übermittelt und das autonome Fahrzeug (AV) mittels der Navigationsinformation (NAVI) gesteuert wird.

15. Zentrales Navigationssystem (ZN) zur zentralisierten Regulierung eines Verkehrsflusses eines vorgegebenen geographischen Gebiets, umfassend mindestens einen Prozessor, wobei das zentrale Navigationssystem derart eingerichtet ist:
- Verkehrsinformationsdaten (VID1, VID2, VID3, ...) zu einem vorgegebenen Zeitpunkt zu empfangen,
- ein computergestütztes Simulationsmodell des Verkehrsflusses des geographischen Gebiets einzulesen,
- den Verkehrsfluss ausgehend von den Verkehrsinformationsdaten mittels des computergestützten Simulationsmodells für eine vorgegebene Zeitspanne zu simulieren,
- den Verkehrsfluss des geographischen Gebiets gemäß einem vorgegebenen Optimierungskriterium und mittels eines computergestützten Optimierungsverfahrens (OPT) auf Basis der Simulation (SM) des Verkehrsflusses zu optimieren,
- von dem optimierten Verkehrsfluss eine Navigationsinformation (NAVI) abzuleiten
und
- die Navigationsinformation (NAVI) zum Regulieren des Verkehrsflusses auszugeben.

16. Zentrales Navigationssystem (ZN) nach Anspruch 15, das mit einer Kommunikationseinheit (KE1, KE2, KE3, ...) eines Verkehrsteilnehmers gekoppelt ist, um Verkehrsinformationsdaten (VID1, VID2, VID3, ...) von der Kommunikationseinheit (KE1, KE2, KE3, ...) zu empfangen und/oder die Navigationsinformation (NAVI) an die Kommunikationseinheit (KE1, KE2, KE3, ...) des Verkehrsteilnehmers zu übermitteln.

17. Kommunikationseinheit (KE1, KE2, KE3,...) eines Verkehrsteilnehmers, die derart eingerichtet ist,
- Verkehrsinformationsdaten (VID1, VID2, VID3,...) des Verkehrsteilnehmers zu erfassen und an ein zentrales Navigationssystem (ZN) nach einem der Ansprüche 15 oder 16 zu übermitteln,
und/oder
- eine durch das zentrale Navigationssystem (ZN) ausgegebene Navigationsinformation (NAVI) zu empfangen.

18. Computerprogrammprodukt umfassend Programmcodeteile, das derart auf einem Prozessor des zentralen Navigationssystems nach Anspruch 15 oder 16 eingerichtet ist, zumindest teilweise die Schritte des Verfahrens nach einem der Ansprüche 1 bis 14 auszuführen.
